# FASCICULE DE BREVET EUROPEEN

(11) **EP 2 297 053 B1**
(45) Date de publication et mention de la délivrance du brevet: **01.01.2014**
(21) Numéro de dépôt: 09757572.4
(22) Date de dépôt: 04.06.2009
(51) Int. Cl.: C03B 5/235

(54) **FOUR DE FUSION DU VERRE**
GLASSCHMELZOFEN
GLASS MELTING FURNACE

(30) Priorité: 05.06.2008 EP 08104268
(43) Date de publication de la demande: 23.03.2011
(73) Titulaire: AGC Glass Europe, 1170 Bruxelles (Watermael-Boitsfort) (BE)
(72) Inventeur: BEHEN, Johan, B-6040 Jumet (BE); DOUXCHAMPS, Olivier, B-6040 Jumet (BE)
(74) Mandataire: Le Vaguerèse, Sylvain Jacques
(86) Numéro de dépôt international: PCT/EP2009/056843
(87) Numéro de publication internationale: WO 2009/147191

(56) Documents cités:
- EP-A- 0 650 934
- EP-A- 1 094 273
- EP-A- 1 136 451
- FR-A- 2 863 690
- LIEVRE K ET AL: "RECENT DEVELOPMENTS IN OXY-FUEL FIRING FOR GLASS MELTERS" GLASS INDUSTRY, GLASS INDUSTRY MAGAZINE. NEW YORK, US, vol. 82, no. 3, 1 mars 2001 (2001-03-01), pages 25-31, XP001059392 ISSN: 0017-1026

## Description

La présente invention concerne les fours de fusion du verre dans lesquels l'énergie de fusion est produite essentiellement par des brûleurs alimentés en combustible et en oxygène ou en gaz très riche en oxygène. Ces fours sont qualifiés habituellement de four à "oxy-combustion".

L'utilisation de manière accessoire de brûleurs à oxy-combustion est bien connue dans les fours de fusion du verre. Sur des fours fonctionnant de manière traditionnelle avec de l'air, il s'agit alors d'ajouter un ou un nombre limité de brûleurs à oxy-combustion. L'introduction de ces brûleurs additionnels est généralement destinée à accroître la capacité de fours existants, éventuellement lorsque ceux-ci voient leur performance décliner du fait de leur ancienneté. Il peut s'agir aussi d'accroître simplement la capacité d'un four donné par l'introduction de sources supplémentaires d'énergie.

L'adjonction de quelques brûleurs oxy-combustion dans les fours de grande capacité, s'effectue habituellement sans modification profonde de la marche générale du four. En particulier la proportion d'énergie issue de l'oxy-combustion reste faible. Elle ne dépasse pas 20% et le plus souvent ne dépasse pas 10% du total. Pour cette raison la continuité de l'approvisionnement en oxygène ne fait pas courir de grands risques à l'installation. Si pour une raison quelconque l'approvisionnement en oxygène se trouve interrompu, le maintien en température du four peut être assuré au moyen des seuls brûleurs fonctionnant en aéro-combustion. La tirée est éventuellement momentanément modifiée, mais l'installation n'est pas mise en danger.

Hors le fait de disposer d'une source d'énergie complémentaire les systèmes fonctionnant dans le mode qualifié "d'oxy-boosting", ne permettent pas de bénéficier de tous les avantages connus qui peuvent résulter de l'oxy-combustion. Au nombre des avantages potentiels figurent principalement une consommation énergétique moindre et des émissions réduites de fumées indésirables.

La réduction de la consommation énergétique par unité de production considérée présente en plus l'avantage de limiter par voie de conséquence les émissions de dioxyde de carbone et donc de répondre aux exigences réglementaires dans ce domaine.

La présence d'azote est aussi source de formation d'oxydes dits NOx, dont l'émission est pratiquement interdite en raison des dommages liés à la présence de ces composés dans l'atmosphère. L'utilisation d'oxygène permet de s'affranchir des problèmes liés à l'azote de l'air, ce qui n'est pas le cas dans les techniques d'oxy-boosting.

En dépit des avantages énoncés ci-dessus, l'utilisation de l'oxy-combustion dans les grands fours verriers reste à développer. Les raisons sont diverses. Ainsi l'utilisation d'oxygène est nécessairement plus coûteuse que celle d'air. Le bilan économique de la mise en oeuvre de l'oxy-combustion est cependant positif en particulier lorsqu'une part significative de la chaleur des fumées est récupérée comme décrit dans la demandeWO 2009/118333. La continuité de fonctionnement requiert par ailleurs l'approvisionnement en oxygène sans interruption.

Pour les fours de grande capacité le volume d'oxygène nécessaire est tel que l'approvisionnement le plus sur est soit par gazoduc, soit par une installation de production in situ. Quel que soit le mode adopté, un problème est d'assurer la permanence de l'approvisionnement dans la mesure où, une interruption momentanée est toujours susceptible de se produire. Dans ces circonstances cependant les conditions doivent être maintenues qui ne fassent pas courir de risque à l'installation.

Les publications antérieures relatives aux fours fonctionnant en oxy-combustion soit n'évoquent pas la question d'une interruption d'approvisionnement en oxy-gène, comme EP 0 650 934 A, soit restent relativement succincts à la façon de remédier à ce problème . L'idée généralement proposée est de substituer une aéro-comustion à l'oxy-combustion. C'est sous diverses formes ce que proposent les publications : « Recent developments in oxy-fuel firing for glass melters » Glass industry magazine vol. 82, n°3 pages 25-31, EP 1094 273 A, FR-A-2 863 690, EP 0 872 690A.

L'invention concerne des modalités de mise en oeuvre de la technique d'oxy-combustion dans les grands fours verriers qui font l'objet des revendications jointes à la présente description.

Le premier objectif en cas d'interruption de l'alimentation est de disposer de moyens qui permettent de maintenir l'installation à des niveaux de températures pour lesquelles le verre fondu reste dans cet état. Pour cela, compte tenu de la déperdition énergétique importante et inévitable, il faut maintenir un certain apport énergétique dans le four. Compte tenu de ce que l'installation est conçue pour fonctionner en oxy-combustion, il est nécessaire de pouvoir apporter l'énergie selon cette modalité en utilisant les moyens présents. Les brûleurs pour oxy-combustion ne sont pas utilisables tels quels pour un fonctionnement avec de l'air. Les volumes respectifs de comburants ne sont pas du même ordre de grandeur. La circulation et les canalisations utilisées avec l'oxygène ne peuvent servir à l'acheminement d'air. Pour cette raison le remplacement de l'oxy-combustion par de l'aéro-combustion n'est pas envisagée, à l'exception éventuellement du cas indiqué plus loin pour quelques brûleurs situés dans la zone d'affinage.

Pour pouvoir alimenter des brûleurs, il est donc nécessaire de disposer d'une source d'oxygène de secours. La difficulté néanmoins est de disposer d'une réserve suffisante pour faire face à l'absence d'alimentation momentanée. Compte tenu de la consommation en régime de fonctionnement normal, les volumes de secours stockés ne peuvent pas suffire pour assurer un fonctionnement complet de l'installation. Selon l'invention, pour maintenir ces stocks à un niveau dont le coût ne soit pas prohibitif, le fonctionnement du four en cas de cessation momentanée d'approvisionnement en oxygène est mis en régime ralenti. L'apport énergétique est réduit au strict minimum pour maintenir le verre en fusion. Le four n'est plus alimenté en matière première et, les sources potentielles de refroidissement sont dans toute la mesure du possible écartées.

Compte tenu du type de risque recensé, et des engagements pris par les fournisseurs d'oxygène, le maintien en température du four doit pouvoir être assuré pendant une durée d'au moins 8 heures. La quantité d'oxygène stockée sur le site de l'installation doit suffire pour maintenir ce régime au moins pendant cette durée. De préférence néanmoins, dans la mesure du possible la quantité stockée est supérieure pour mieux prévenir tout risque de défaut d'approvisionnement qui dépasserait ce que les fournisseurs sont supposés garantir. Il est avantageux de stocker une quantité d'oxygène correspondant à 20 heures de fonctionnement et de préférence correspondant à 30 heures de fonctionnement.

L'apport réduit en énergie est destiné à maintenir le verre présent dans le four en fusion, mais n'est pas destiné à fondre de nouveaux matériaux. Dans ces conditions la quantité d'énergie nécessaire peut être réduite de façon significative. Avantageusement, l'énergie nécessaire, tenant compte des déperditions inévitables, ne représente pas plus du tiers de l'énergie consommée en régime de fonctionnement normal.

Dans le mode de maintien en température, l'équilibre du four est profondément modifié. L'apport énergétique est distribué de façon différente de celle en fonctionnement normal.

La masse fondue se répartit dans différentes zones du four : fusion, affinage et braise. L'apport énergétique en fonctionnement normal est localisé dans les deux premières. La braise qui précède le bain "float" est destinée à réduire la température du verre pour l'amener progressivement à la viscosité adéquate. L'absence de moyens de chauffage au dessus de la braise ne permet pas de maintenir la température. Pour éviter le figeage du verre il est donc nécessaire de prévoir des moyens pour compenser l'absence de renouvellement de la masse de verre fondu dans cette zone, renouvellement qui seul fait que la température s'y maintient en régime normal.

Selon l'invention il faut prévoir des brûleurs de secours au dessus de la braise. Ces brûleurs peuvent être installés de manière permanente ou ils peuvent être amovibles, n'étant dans ce cas disposés qu'en cas de besoin. Les brûleurs amovibles sont avantageusement disposés dans les ouvreaux qui en temps normal permettent l'évacuation de l'atmosphère chaude au dessus de la braise favorisant le refroidissement recherché.

Lorsque ces brûleurs sont amovibles leur mode d'alimentation doit se prêter à cette particularité. Leur mise en oeuvre rapide nécessite de disposer de conduits d'alimentation facilement connectables. Le raccord au circuit d'alimentation en combustible, qu'il soit liquide ou gazeux, ne soulève pas de difficultés particulières. A l'inverse ce caractère mobile rend une alimentation en oxygène et particulièrement en oxygène chaud, très délicate. Pour cette raison, les brûleurs de secours utilisés au-dessus de la braise sont des brûleurs fonctionnant en aéro-combustion. Il faut bien considérer que le bénéfice de l'utilisation d'oxy-combustion est nécessairement écarté dans ces procédures de secours: La présence d'une partie d'aéro-combustion n'a pas pour but d'optimiser l'apport énergétique mais simplement le maintien du four en température.

Le fonctionnement des brûleurs est aménagé pour un régime optimisé. Chaque brûleur opère dans un domaine de puissance qui peut varier dans certaines limites autour d'une puissance nominale de référence. Pour conserver un bon rendement énergétique il n'est pas souhaitable de s'écarter trop de ce domaine. En conséquence de la réduction d'apport énergétique il est donc nécessaire de limiter le nombre des brûleurs actifs en régime de maintien en température.

Le choix de brûleurs qui sont maintenus en activité tient compte des spécificités de l'oxy-combustion mais aussi de ce mode particulier de fonctionnement qui ne nécessite plus la fusion de matière premières.

Le régime d'oxy-combustion tel qu'il est décrit dans la demande citée plus haut comprend une circulation spécifique des fumées à l'intérieur du four. Cette circulation pour la part la plus importante des fumées est dirigée vers l'amont du four pour favoriser le transfert d'énergie aux zones du four qui nécessitent le plus grand apport.

Au-delà la circulation des fumées rassemble la majeure partie de celles-ci dans le but notamment de récupérer le plus possible de l'énergie qu'elles véhiculent. Cette énergie récupérée est utilisée notamment pour le préchauffage de l'oxygène et, le cas échéant, des combustibles consommés.

Les fours concernés doivent aussi être sensiblement exempts d'une atmosphère chargée d'azote. Pour cette raison le plus souvent tous les brûleurs du four fonctionnent en oxy-combustion. Si néanmoins il est possible de conserver une partie de la combustion de type aéro-combustion, l'énergie engendrée par oxy-combustion représente au moins 80% de l'énergie totale mise en oeuvre dans le four, et de préférence au moins 90% de celle-ci.

Indépendamment des constituants de l'atmosphère du four provenant de la combustion, il faut encore prévenir le plus possible la pénétration d'air extérieur d'une part pour éviter une perte d'énergie correspondant au réchauffage de cet air, mais surtout pour prévenir le plus possible la formation de NOx indésirables dûe au passage de cet air à travers les hautes températures des flammes (ces températures sont de l'ordre de 1800 à 2300°C suivant le type de brûleur oxygène choisi).

Quelles que soient les constructions envisagées les fours verriers ne peuvent être maintenus parfaitement étanches à l'atmosphère extérieure. Aussi pour prévenir l'admission d'atmosphère environnante la circulation des fumées dans le four est aménagée de telle sorte qu'elle développe une étanchéité de caractère dynamique.

Les dispositions du four ne sont pas entièrement modifiables pour tenir compte des conditions spécifiques du régime de secours. Le choix est cependant possible des brûleurs qui sont maintenus en activité et de ceux qui sont momentanément à l'arrêt.

Dans ce régime particulier les fumées continuent d'être dirigées vers l'amont du four ne serait-ce que pour continuer d'entretenir la récupération d'énergie pour le chauffage de l'oxygène utilisé. En régime normal une partie limitée des fumées est extraite dans la partie aval de la zone d'affinage pour évacuer avec ces fumées le volume restreint d'air provenant de la braise. On évite ainsi le risque de formation d'oxydes d'azote. Le maintien du courant d'air venant de la braise est destiné à éviter l'entrainement possible de poussière en suspension dans l'atmosphère du four.

En régime de secours, le souci principal est le maintien des températures. Une introduction momentanée d'un peu d'air dans le four est supportable. Dans ces conditions il est préférable selon l'invention de faire en sorte que la totalité des fumées soient évacuées en amont. D'une part l'utilisation de l'énergie est au mieux transmise à la masse fondue, et d'autre part, même en régime de secours dégageant moins de fumées, la récupération de la chaleur de celles-ci est maintenue au plus haut possible, garantissant de disposer de conditions permettant le maintien du chauffage notamment de l'oxygène utilisé.

L'alimentation en matières premières étant interrompue, la quantité d'énergie nécessaire dans la partie amont du four est beaucoup moindre. Même si l'énergie des brûleurs est réduite comme indiqué précédemment, l'équilibre thermique dans cette partie amont peut être atteint même si les premiers brûleurs ne sont pas maintenus en activité.

La distribution de la puissance par le choix des brûleurs maintenus actifs tend à uniformiser les températures des zones de fusion et d'affinage. Cette distribution est faite aussi de manière à maintenir le plus possible les boucles de convection à l'intérieur du bain. Ces circulations, même ralenties, continuent d'assurer un réchauffement des parties les plus exposées au refroidissement. Il s'agit notamment de la sole du four.

De manière générale pour obtenir ce résultat, la majeure partie de l'énergie est apportée par des brûleurs situés dans la zone centrale à la limite des zones de fusion et d'affinage. En amont, comme indiqué, le besoin en énergie est moindre qu'en fonctionnement normal. A l'inverse, faute d'écoulement de la masse fondue vers la zone d'affinage, il peut être nécessaire dans cette zone, comme pour la braise, de prévoir des brûleurs additionnels par rapport à ceux activés dans le régime normal.

Avantageusement si des brûleurs additionnels sont prévus dans la zone d'affinage, ces brûleurs fonctionnent aussi à l'oxygène pour conserver le plus possible le bénéfice de l'oxy-combustion. Dans la mesure où ces brûleurs ne sont pas installés de manière permanente, les circuits d'alimentation amovibles se prêtent mal à l'utilisation d'oxygène chaud. Le fonctionnement de ces brûleurs additionnels mobiles dans la zone d'affinage, est donc de préférence assuré avec de l'oxygène non chauffé.

Le choix de brûleurs à oxygène est d'autant préféré qu'il garantit le maintien convenable des températures dans cette zone du four. Des brûleurs additionnels fonctionnant en aéro-combustion qui seraient disposés en regard des ouvreaux existants ne permettraient pas de maintenir convenablement les températures requises. L'encombrement des brûleurs mobiles usuels, fait que ceux-ci conduiraient au développement de la flamme dans l'épaisseur des parois du four. Le chauffage de la voûte dans ces conditions ne serait assuré que par le contact avec les gaz de combustion. Leur température n'est pas suffisamment élevée pour maintenir la voûte aux valeurs recherchées.

Dans le principe la disposition de brûleurs aéro-combustion dont les flammes se développeraient à partir des parois est possible. Une telle disposition n'est pas cependant usuelle. Elle nécessiterait l'enlèvement d'éléments réfractaires des parois du four, opération qui est particulièrement mal commode. La disposition dès la construction de brûleurs de secours est aussi possible mais n'est pas préférée pour des raisons d'ordre pratique.

Si les brûleurs destinés à l'oxy-combustion ne sont pas utilisables tels quels en aéro-combustion pour les raisons indiquées plus haut, des modifications de ces brûleurs permettent le cas échéant un fonctionnement alternatif. Il a été indiqué que le remplacement de l'oxygène par de l'air n'est pas possibles en utilisant les conduits d'admission de ces brûleurs. Une solution alternative pour ces brûleurs est de maintenir l'introduction du combustible et celle d'oxygène dit "primaire" introduit avec le combustible. Cet oxygène primaire assure l'inflammation permanente. Les alimentations en oxygène "secondaires" et éventuellement "tertiaires" qui représente la plus grande partie du comburant et assurent la combustion étagée dans la flamme, sont interrompues. A la place de l'air est alors introduit par des conduits appropriés disposés dans des blocs réfractaires voisins de la flamme "primaire". Les flammes dans ces conditions se développent bien dans l'enceinte du four. En conséquence leur rayonnement permet de maintenir les voûte aux températures adéquates. La mise en place de ces conduits d'admission d'air est cependant une opération relativement lourde. Pour cette raison elle n'est entreprise qu'à défaut de pouvoir maintenir les modes alternatifs décrits précédemment.

En régime de fonctionnement normal les températures des voûtes du four se situent entre 1350 et 1450°C. La réduction d'apport d'énergie et le maintien du bain à l'état fondu s'accompagnent d'une baisse sensible de la température de ces voûtes. Ces températures restent cependant élevées. Dans les zones de fusion et d'affinage les températures ne doivent pas être inférieures à 1100°C.

Dans la zone de braise la température en régime normal est réglée pour permettre de disposer du verre à environ 1100°C lorsqu'il est versé sur le bain "float". Pour atteindre ces températures non seulement il n'est pas prévu de brûleurs, mais une ventilation importante est entretenue pour abaisser progressivement la température du verre. Dans ces conditions la température de la voûte est sensiblement inférieure à celle dans les zones de fusion et d'affinage.

Dans le mode de secours comme indiqué précédemment il est nécessaire d'apporter de l'énergie pour éviter le figeage du verre. La température de voûte peut cependant être un peu plus basse que celle dans les zones précédentes. Elle ne doit pas descendre en dessous de 1050°C.

Le maintien des boucles de convection résulte en régime normal non seulement des mécanismes naturels engendrés par les différences de températures existant entre les zones du four, mais aussi de mouvements induits par des moyens supplémentaires. Ces derniers sont par exemple des bouillonneurs, des mélangeurs ou des barrages. Tous ces moyens ont en commun, en dehors de favoriser ces mouvements de convection, de conduire à un certain refroidissement du verre.

Les mélangeurs ou les barrages qui sont soumis à des conditions très agressives doivent être refroidis en permanence lors de leur utilisation. En régime de maintien en température, on s'efforce de minimiser les déperditions. Dans ce sens les mélangeurs sont avantageusement retirés du bain ou leur refroidissement interrompu. Pour les barrages qui sont bien évidemment inamovibles, le refroidissement est également interrompu.

Pour l'alimentation des bouillonneurs disposés sur la sole, il est difficile de l'interrompre entièrement. La nécessité d'éviter qu'ils ne s'obstruent par suite du figeage du verre, conduit à maintenir un certain débit de gaz. Pour limiter le refroidissement lié à cette introduction, le débit est réduit au strict minimum.

En pratique, pour les fours à oxy-combustion considérés, l'utilisation de moyens de chauffage du bain par des électrodes immergées n'est pas envisagée sinon de manière très limitée, par exemple dans la zone d'enfournement des matières premières. Dans tous les cas l'apport énergétique en régime normal ne dépasse pas 5% du total. Ces moyens sont bien évidemment indépendants de l'approvisionnement en oxygène et pour cette raison peuvent contribuer à l'apport d'énergie pour le fonctionnement du régime de secours.

Pour obtenir un bilan économique avantageux des grands fours à oxy-combustion il est nécessaire de récupérer une part significative de la chaleur contenue dans les fumées sortant du four. En pratique comme pour les fours à aéro-combustion, l'utilisation la plus rentable de cette énergie récupérée consiste à réchauffer les réactifs introduits dans le four : oxygène, combustible et éventuellement matières premières.

Le chauffage de l'oxygène requiert des précautions très contraignantes. Les installations dans lesquelles l'oxygène circule doivent être parfaitement étanches, résistantes aux températures élevées et à l'oxygène porté à ces températures. Le préchauffage de l'oxygène est effectué avantageusement dans des échangeurs constitués dans des aciers montrant une excellente résistance à l'oxygène chaud. Des échangeurs et des matériaux convenant à cet usage sont décrits dans la demande de brevet européen EP1995543. Pour minimiser les risques liés à l'acheminement de l'oxygène chaud différentes dispositions sont proposées dans la demande WO 2009/118333 déjà citée.

En substance deux types de dispositions sont proposées. D'une part le transfert d'énergie s'effectue en deux temps. Dans un premier temps les fumées sont passées dans un récupérateur et le transfert d'énergie se fait avec un fluide caloporteur intermédiaire, par exemple de l'air. Dans un deuxième temps le fluide caloporteur passe dans un échangeur où il réchauffe l'oxygène. D'autre part les échangeurs chauffant l'oxygène sont situés le plus près possible des brûleurs pour réduire les risques liés à la corrosion. De la même façon les joints et raccords sont évités autant que possible.

Ce système de récupération continue de fonctionner en régime réduit. Le traitement est simplement consacré au chauffage de l'oxygène alimentant les brûleurs conservés actifs.

En pratique pour garantir une parfaite sécurité de fonctionnement il est préférable de maintenir la température de l'oxygène à moins de 650°C et de préférence à moins de 600°C.

De même le combustible utilisé est avantageusement préchauffé, qu'il s'agisse de gaz naturel ou de fuel liquide. Pour les gaz naturels la température de préchauffage est avantageusement inférieure à 650°C et de préférence inférieure à 550°C. Pour les fuels lourds, la température est généralement moins élevée et ne dépasse pas 180°C, et de préférence pas 150°C pour éviter l'encrassement qui résulte du craquage de ces combustibles.

L'invention est décrite avec certains détails dans la suite en faisant référence aux planches de dessins dans lesquelles :
- la figure 1 est une vue schématique en perspective d'un four selon l'invention ;
- la figure 2 illustre de façon schématique en vue de dessus les dispositions de la figure 1 en fonctionnement de secours.

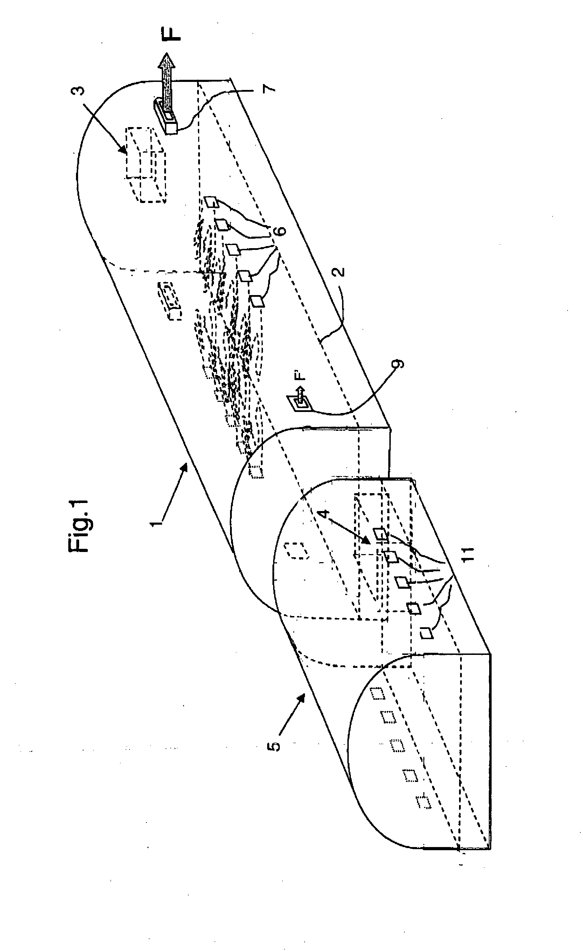

Le four présenté à la figure 1 est du type de ceux utilisés pour les productions de verre de grande capacité comme ceux servant à alimenter la production de verre plat par les techniques de verre "flotté". Des fours de ce type produisent en continu des quantités de verre qui peuvent aller jusqu'à 1000 tonnes/jour. Pour atteindre ces performances les fours doivent présenter une puissance qui atteint 60 MW.

Le four 1 comprend un bassin disposé dans une enceinte close. L'ensemble est constitué dans des matériaux réfractaires résistant aux températures, à la corrosion des fumées et à l'agression des matériaux fondus. Le niveau du bain dans le bassin est représenté par une ligne pointillée 2.

Le four est alimenté en matières premières à une de ses extrémités. L'ouverture par laquelle s'effectue l'enfournement de ces matières premières est schématisée en 3. En pratique pour faciliter la distribution sur la surface du bain plusieurs points d'enfournement sont habituellement aménagés. La sortie du verre fondu s'opère à l'extrémité opposée par un goulet ("neck") 4 de largeur réduite par rapport à celle du bassin. Le plus habituellement le fond du neck 4 est au niveau de la sole du four.

Le neck n'est pas totalement immergé dans le verre fondu. Il demeure un espace entre la partie haute du neck et la surface de la nappe de verre. Les conditions de fonctionnement, pour ce qui concerne les flux gazeux dans le four, sont réglées de telle sorte que l'atmosphère du four ne passe pas dans le neck, pour éviter tout risque d'entraînement de poussières en suspension. Pour assurer ce fonctionnement il est préférable de conserver un faible courant gazeux, circulant à contre-courant du flux de verre fondu. Etant destiné seulement à prévenir un courant gazeux en sens inverse, ce courant est maintenu aussi faible que possible.

Des brûleurs dont l'emplacement est indiqué en 6 sont disposés le long des parois latérales du four, de chaque côté de celui-ci pour étendre les flammes pratiquement sur toute la largeur du bassin. Les brûleurs sont espacés les uns des autres de manière à distribuer l'apport énergétique sur une grande partie de la longueur de ce même bassin de fusion-affinage.

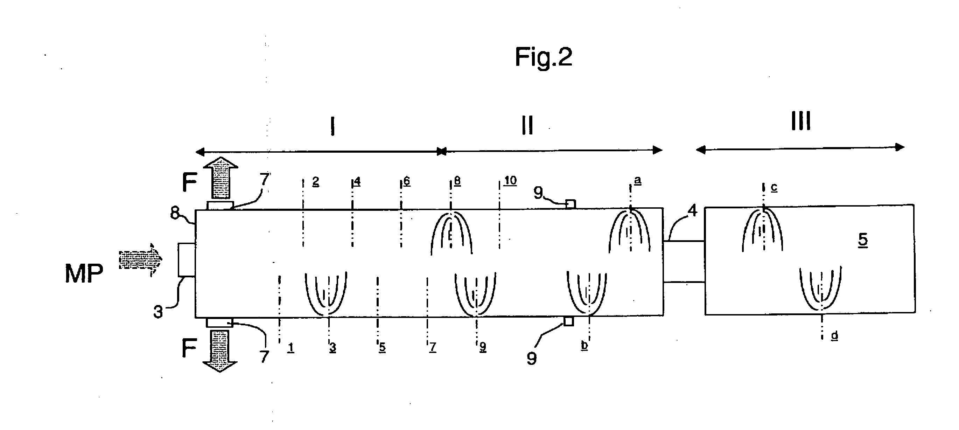

Les gaz de combustion F sont évacués pour la part la plus importante par les sorties 7 localisées à proximité de la zone d'enfournement et à une certaine distance des brûleurs les plus proches. Dans la représentation (figure 1 et 2) deux sorties 7 sont disposées symétriquement sur les parois latérales tandis que l'enfournement des matières premières (MP) est dans l'axe du four. Il s'agit d'un mode préféré mais d'autres dispositions sont également possibles, comme par exemple la sortie des gaz dans la paroi 8 fermant le four dans sa partie amont. Ces sorties peuvent aussi être distribuées de manière différente, l'important étant de faire en sorte que les fumées remontent à contre-courant de l'écoulement du verre V dans le four. Le cas échéant, la sortie des fumées peut s'effectuer, au moins partiellement, par la ou les ouvertures d'enfournement.

Comme indiqué précédemment, selon l'invention on fait en sorte que l'enceinte du four soit pratiquement étanche à la pénétration d'air extérieur. La circulation des fumées vers l'amont prévient la pénétration de ce côté du four. Les passages éventuellement disposés sur les parois latérales sont également essentiellement étanches à la pénétration de l'air ambiant. Pour refouler le peu d'air qui peut provenir de la partie conditionnement 5 (braise), une circulation très limitée des fumées est avantageusement aménagée vers l'aval du four. Ces fumées F' sont évacuées par les sorties 9.

A la figure 2 les trois zones du four sont indiquées I (fusion) II (affinage), III (conditionnement/braise)

La limite entre fusion et affinage n'est généralement pas matérialisée dans la structure du four. En particulier si dans ces fours un barrage est disposé sur la sole, ce barrage ne coïncide pas ordinairement avec cette limite même si elle participe aux conditions qui conduisent à sa localisation.

La distinction entre zone de fusion et d'affinage est dans tous les cas fonctionnelle. Elle correspond au mode de circulation du verre dans le bassin. Celle-ci comprend une première boucle de convection dans la partie de fusion et une boucle, dont la rotation est en sens inverse de la première, dans la partie affinage. En l'absence de moyen influant directement sur la circulation, la position de la limite de la zone de fusion et de celle d'affinage est déterminée par un ensemble de paramètres de fonctionnement qui comprend notamment la distribution de l'énergie par les brûleurs

En règle générale, en fonctionnement normal, l'apport d'énergie nécessaire à la fusion des matières premières est plus important que celui qui maintient le verre à température pour l'affinage. En conséquence le nombre de brûleurs, et surtout la puissance qu'ils délivrent, est plus importante dans la zone de fusion.

Selon les modes de fonctionnement qui s'avèrent les plus avantageux, la "courbe de feu", c'est-à-dire la distribution des températures le long du four, progresse d'abord depuis l'amont jusque vers une partie centrale voisine du début de la zone d'affinage. La température varie un peu ensuite en décroissant légèrement jusqu'au neck 4 préparant le passage dans la zone de conditionnement. Pour cette raison l'extrémité aval du four est normalement dépourvue de brûleurs.

La distribution des brûleurs est représentée à la figure 2 par l'axe de ceux-ci. Ils sont de préférence disposés en quinconce de part et d'autre du bassin, pour faire en sorte que les flammes émises dans des directions opposées ne se heurtent pas.

La zone de conditionnement (braise) 5 ne comporte aucun brûleur en fonctionnement normal. Des ouvertures 11 sont disposées sur les parois et de l'air ambiant est envoyé dans l'enceinte 5 pour conduire le verre jusqu'à une température compatible avec son application sur le bain "float".

Le mode de fonctionnement en régime de maintien en température est illustré à la figure 2. Une partie seulement des brûleurs est maintenue en activité. Dans l'exemple représenté, en numérotant les brûleurs en fonction de leur position le long du four en partant de la zone d'enfournement seuls sont en activité les brûleurs n° 3, 8 et 9 sur les dix brûleurs qui sont des brûleurs installés en permanence dans le four. Les brûleurs en activité sont illustrés par la représentation schématique des flammes correspondantes.

L'extrémité aval de la zone d'affinage ne comporte pas normalement de brûleurs actifs. L'écoulement du verre fondu suffit à maintenir les conditions de température. En régime de secours l'écoulement du verre est stoppé. Pour cette raison l'extrémité de l'affinage requiert un apport d'énergie. Dans la forme représentée, deux brûleurs additionnels a et b sont disposés de manière temporaire sur des emplacements préparés à l'avance dans les parois du four. Les brûleurs intervenant dans l'enceinte dévolue à l'oxy-combustion il est préférable de faire en sorte que ces brûleurs soient également de type oxy-brûleur. Leur caractère amovible rend l'alimentation en oxygène chaud très difficile. Pour offrir toute la sécurité requise, la construction des canalisations et échangeurs utilisées pour l'acheminement d'oxygène chaud nécessite des particularités peu compatibles avec la mobilité. Pour ces raisons les oxy-brûleurs a et b sont de préférence alimentés en oxygène froid. Il est possible cependant, compte tenu du caractère temporaire du fonctionnement de ces brûleurs de disposer des aéro-brûleurs. Momentanément une partie des avantages de l'oxy-combustion est alors suspendue. En contrepartie, l'usage d'aéro-brûleurs permet de réduire la consommation d'oxygène et par conséquent, pour une réserve de secours donnée, d'allonger la disponibilité des cette réserve.

En régime normal la braise 5 ne comporte pas de dispositif de chauffage du verre. En régime de secours il devient nécessaire de fournir le minimum d'énergie qui conserve le verre à l'état fondu. Aucune fumée n'étant générée dans l'enceinte de la braise, celle-ci ne comporte pas non plus de conduit pour la canalisation de ces fumées hors de cette enceinte. Dans ces conditions, le choix des brûleurs installés c et d est celui d'aéro-brûleurs. Une fois encore on évite ainsi de puiser dans la réserve d'oxygène, réserve nécessairement de volume limité. Par ailleurs la mise en oeuvre de brûleurs amovibles fait que le positionnement de la flamme ne permet pas de chauffer la voûte aux plus hautes températures. Mais dans le cas de la braise la température nécessaire est moindre que dans la partie fusion affinage. L'utilisation de ces brûleurs permet d'atteindre ces températures.

Les fumées F à la sortie du four, sont utilisées dans des dispositifs destinés à récupérer une partie de l'énergie entraînée par ces fumées. Avantageusement cette récupération sert au chauffage de l'oxygène des brûleurs. La mise en oeuvre la plus sure pour chauffer l'oxygène comporte un double système d'échanges thermiques avec une fluide caloporteur intermédiaire. Le système en question décrit dans la demande citée plus haut comprend un premier échange dans un récupérateur, le fluide caloporteur chauffé dans ce récupérateur est ensuite passé dans un échangeur pour y réchauffer l'oxygène acheminé ensuite aux brûleurs.

Les fumées à leur sortie sont initialement à des températures de l'ordre de 1200 à 1400°C. Il est préférable de les passer dans un "récupérateur", autrement dit un échangeur sommaire qui permet d'abaisser la température des fumées en vue de leur traitement avant rejet dans l'atmosphère. Le fluide caloporteur, par exemple de l'air peut être porté à très haute température par exemple de l'ordre de 800°C. Cet air est dirigé vers les échangeurs pour chauffer l'oxygène. La température de l'oxygène à la sortie de ces échangeurs peut être aussi élevée que 600°C, mais de préférence ne dépasse pas 550°C. Les échangeurs chauffant l'oxygène sont de préférence à proximité immédiate des brûleurs pour minimiser le cheminement de l'oxygène chaud jusqu'à son point d'utilisation.

En régime de secours, la circulation des fumées reste sensiblement la même qu'en régime normal. Les fumées, même moins abondantes qu'en régime normal, peuvent encore servir au chauffage d'une quantité également réduite d'oxygène.

A titre indicatif, dans un four tel que représenté à la figure 1 la puissance délivrée pour aboutir à une tirée de 600 tonnes/jour de verre est de 60MW. En régime de secours la puissance délivrée par les brûleurs 3, 8 et 9 n'est plus que d'environ 7MW. Les deux brûleurs additionnels dans la zone d'affinage a et b ajoutent environ 2,5MW, et les brûleurs situés dans la zone de braise c et d délivrent pour leur part 4MW. Au total la puissance est de 13,5MW soit un peu moins du quart de la puissance de fonctionnement en régime de production. Pour alimenter les brûleurs en oxy-combustion produisant 9,5MW, l'oxygène nécessaire est de l'ordre de 2000Nm³/h. Une réserve d'oxygène liquide de 80 000 litres permet d'alimenter le four pendant une période pouvant atteindre 30 heures, temps en principe très supérieur à celui prévu pour que les fournisseur rétablissent une alimentation suffisante. Au-delà une alimentation par citerne mobile doit obligatoirement prendre le relais.

## Revendications

1. Mode d'opération d'un four de fusion du verre comprenant un bassin de fusion de forme canal, l'introduction des matières premières s'effectuant à une extrémité amont, le verre fondu étant récupéré à l'extrémité aval, four chauffé au moyen de brûleurs, dans lequel l'énergie de combustion est produite par oxy-combustion pour au moins 80%, l'oxygène utilisé faisant l'objet d'un chauffage au moyen des fumées de combustion, l'approvisionnement en oxygène étant effectué de façon continue à partir d'installations de production situées à proximité ou par gazoduc à partir d'installations situées à distance, **caractérisé en ce que** le four est équipé de moyens de stockage d'oxygène tels qu'en cas de cessation de l'approvisionnement continu le fonctionnement du four puisse être assuré au moins en mode de maintien en température pendant une durée minimum de huit heures, de préférence d'au moins 20 heures et de façon particulièrement préférée pendant au moins 30 heures, la zone de braise du four ne comportant pas d'apport énergétique significatif en fonctionnement normal, des brûleurs additionnels fonctionnant en aéro-combustion sont localisés dans cette zone en mode de maintien en température, ce maintien en température étant tel que les températures de la voûte du four dans les zones de fusion et d'affinage ne soient pas inférieures à 1100°C, et dans la zone de braise pas inférieures à 1050°C.

2. Mode d'opération d'un four selon la revendication 1 dans lequel en régime de maintien en température une partie seulement des brûleurs en oxy-combustion, et de préférence au plus la moitié de ces brûleurs, est maintenue en fonctionnement.

3. Mode d'opération d'un four selon la revendication 2 dans lequel les brûleurs maintenus en action sont localisés de telle sorte que les fumées balaient pratiquement la totalité de la surface du bain avant d'être évacuées.

4. Mode d'opération d'un four selon l'une des revendications précédentes dans lequel en régime normal comme en régime de maintien en température, au moins 65% des fumées sont évacuées en amont du four à proximité de l'enfournement des matières premières.

5. Mode d'opération d'un four selon l'une des revendications précédentes dans lequel les éléments au contact de la matière fondue et ordinairement refroidis, tels que les mélangeurs, ou les barrages modifiant l'écoulement du verre fondu, sont soit retirés du bain (mélangeurs) soit leur refroidissement est interrompu (barrages).

6. Mode d'opération d'un four selon la revendications 5, dans lequel lorsque le four comprend des bouillonneurs, le régime de ceux-ci est maintenu au strict minimum pour qu'ils ne soient pas obstrués par figeage du verre.

## Patentansprüche

1. Verfahren zum Betreiben eines Glasschmelzofens, der eine kanalförmige Schmelzwanne umfasst, wobei die Einbringung des Rohmaterials an einem stromaufwärtigen Ende erfolgt, und das geschmolzene Glas an dem stromabwärtigen Ende wiedergewonnen wird, wobei der Ofen mittels Brennern erhitzt wird, bei denen zumindest 80% der Verbrennungsenergie durch. Sauerstoffverbrennung erzeugt werden, wobei der verwendete Sauerstoff einer Erwärmung zumindest mittels Verbrennungsgasen unterzogen wird, die Sauerstoffversorgung kontinuierlich von einer nahegelegenen Produktionsanlage aus oder über eine Gasleitung von einer entfernt gelegenen Anlage aus erfolgt, **dadurch gekennzeichnet, dass** der Ofen mit Sauerstoffspeichermitteln ausgestattet ist, so dass in dem Fall, dass die kontinuierliche Versorgung stoppt, die Funktion des Ofens zumindest in einem temperaturaufrechterhaltenden Modus für einen Mindestzeitraum von acht Stunden, vorzugsweise mindestens 20 Stunden und besonders bevorzugt mindestens 30 Stunden, sichergestellt werden kann, die Glutzone des Ofens im Normalbetrieb keine signifikante Energiezufuhr aufweist, die zusätzlichen Brenner, die durch Luftverbrennung arbeiten, in dieser Zone in dem temperaturaufrechterhaltenden Modus angeordnet sind, wobei die Aufrechterhaltung der Temperatur derart ist, dass die Temperaturen des Gewölbes des Ofens in der Schmelz- und der Läuterungszone nicht weniger als 1100°C betragen und in der Glutzone nicht weniger als 1050°C betragen.

2. Verfahren zum Betreiben eines Ofens nach Anspruch 1, wobei in dem temperaturaufrechterhaltenden Betrieb nur ein Teil der Brenner mit Sauerstoffverbrennung und bevorzugt höchstens die Hälfte der Brenner in Funktion gehalten wird.

3. Verfahren zum Betreiben eines Ofens nach Anspruch 2, wobei die Brenner, die aktiv gehalten werden, derart angeordnet sind, dass Rauchgase praktisch die gesamte Fläche eines Bads überstreichen, bevor sie abgeführt werden.

4. Verfahren zum Betreiben eines Ofens nach einem der vorhergehenden Ansprüche, wobei in dem Normalbetrieb und in dem temperaturaufrechterhaltenden Betrieb zumindest 65% der Rauchgase stromaufwärts des Ofens in der Nähe der Beschickungsstelle des Rohmaterials abgeführt werden.

5. Verfahren zum Betreiben eines Ofens nach einem der vorhergehenden Ansprüche, wobei die Elemente, die mit dem geschmolzenen Material in Kontakt sind und üblicherweise gekühlt sind, wie die Mischer oder die Dämme, die den Abfluss bzw. Strom des geschmolzenen Glases verändern, aus einem Bad (Mischer) entfernt werden oder ihre Kühlung unterbrochen wird (Dämme).

6. Verfahren zum Betreiben eines Ofens nach Anspruch 5, wobei, wenn der Ofen Rührer bzw. Blasenbildner umfasst, der Betrieb desselben streng auf Minimum gehalten wird, damit sie durch das Erstarren des Glases nicht verstopft werden.

## Claims

1. Method of operation of a glass melting furnace comprising a channel-shaped melting bath, wherein the raw materials are introduced at an upstream end, the molten glass is recovered at the downstream end and the furnace is heated by burners, in which furnace the combustion energy is produced to at least 80% by oxy-combustion, wherein the oxygen used is subjected to heating by means of combustion gasses, the oxygen is supplied continuously from production installations located nearby or by gas pipeline from remote production installations, **characterised in that** the furnace is equipped with means for storing oxygen so that in the event of stoppage of the continuous supply, the operation of the furnace can be assured at least in temperature maintaining mode for a minimum period of eight hours, preferably at least 20 hours and particularly preferred for at least 30 hours, wherein the conditioning zone of the furnace does not have a significant energy supply in normal operation, additional burners operating by air-combustion are located in this zone in the temperature maintaining mode, and this maintaining of temperature is such that the temperatures of the vault of the furnace in the melting and refining zones are not lower than 1100°C and not lower than 1050°C in the conditioning zone.

2. Method of operation of a furnace according to claim 1, in which in the temperature maintaining mode only a portion of the burners operating by oxy-combustion, and preferably at most half these burners, is/are kept in operation.

3. Method of operation of a furnace according to claim 2, in which the burners kept in action are located such that the combustion gasses sweep over practically the whole of the surface of the bath before being evacuated.

4. Method of operation of a furnace according to one of the preceding claims, in which in normal mode as in temperature maintaining mode at least 65% of the combustion gasses are evacuated upstream of the furnace close to the charging area of the raw materials.

5. Method of operation of a furnace according to one of the preceding claims, in which the elements that are in contact with the molten material and are usually cooled such as mixers or dams that modify the flow of the molten glass are either removed from the bath (mixers) or their cooling is interrupted (dams).

6. Method of operation of a furnace according to claim 5, in which when the furnace comprises bubbler systems the operating speed of these is kept to a strict minimum so that they are not clogged by solidification of the glass.
